# EUROPÄISCHE PATENTSCHRIFT

(11) **EP 2 411 581 B1**
(45) Veröffentlichungstag und Bekanntmachung des Hinweises auf die Patenterteilung: **10.04.2019**
(21) Anmeldenummer: 10706596.3
(22) Anmeldetag: 23.02.2010
(51) Int. Cl.: E01C 23/088, B28D 1/18

(54) **AUSWERFER FÜR STRASSENFRÄSMASCHINE, AUSWERFEREINHEIT UND FRÄSWALZE MIT AUSWERFER**
EJECTOR FOR ROAD MILLING MACHINE, EJECTOR UNIT AND MILLING DRUM WITH EJECTOR
ÉJECTEUR POUR UNE FRAISEUSE ROUTIÈRE, UNITÉ D'ÉJECTION, ET TAMBOUR DE FRAISAGE AVEC UNITÉ D'ÉJECTION

(30) Priorität: 25.03.2009 DE 102009014730
(43) Veröffentlichungstag der Anmeldung: 01.02.2012
(60) Teilanmeldung: 19159580.0
(73) Patentinhaber: Wirtgen GmbH, 53578 Windhagen (DE)
(72) Erfinder: BUHR, Karsten, 56594 Willroth (DE); ABRESCH, Stefan, 56369 Dierdorf (DE); LEHNERT, Thomas, 56587 Oberraden (DE); HAEHN, Guenter, 53639 Koenigswinter (DE); BARIMANI, Cyrus, 53639 Koenigswinter (DE)
(74) Vertreter: Herrmann, Jochen
(86) Internationale Anmeldenummer: PCT/EP2010/052290
(87) Internationale Veröffentlichungsnummer: WO 2010/108743

(56) Entgegenhaltungen:
- EP-A1- 0 096 585
- DE-A1- 2 316 406
- DE-C1- 3 708 520
- JP-A- H 083 919
- US-A- 5 101 583
- US-A- 5 315 770

## Beschreibung

Die Erfindung betrifft einen Auswerfer für eine Straßenfräsmaschine, eine Auswerfereinheit und eine Fräswalze mit einem Auswerfer.

Straßenfräsmaschinen weisen üblicherweise ein Fräsrohr auf, auf dessen Oberfläche eine Vielzahl von Meißelhaltern befestigt sind. Dabei sind die Meißelhalter meist Teil eines Meißelhalterwechselsystems, das auch ein Basisteil umfasst. Das Basisteil ist auf der Oberfläche des Fräsrohrs angeschweißt und nimmt den Meißelhalter auswechselbar auf. Der Meißelhalter dient zur Befestigung eines Meißels, üblicherweise eines Rundschaftmeißels, wie er beispielsweise aus der DE 37 01 905 A1 bekannt ist. Die Meißelhalter sind derart auf der Oberfläche des Fräsrohrs angeordnet, dass sich spiralförmige Wendel ergeben. Die Wendel gehen dabei vom Randbereich des Fräsrohrs aus und drehen sich zur Mitte des Fräsrohrs hin.

Damit treffen sich die Wendel, die von den gegenüberliegenden Randbereichen ausgehen, jeweils in der Mitte des Fräsrohrs. In diesem Bereich sind dann auch ein oder mehrere Auswerfer angeordnet. Die Wendeln fördern das von den Meißeln abgetragene Gut zu den Auswerfern. Die transportieren es dann aus dem Wirkungsbereich des Fräsrohrs ab.

Aus JPH083919A1 ist ein Auswerfer für eine Straßenfräsmaschine bekannt. Dieser Auswerfer weist eine in Vorschubrichtung gerichtete Förderfläche und eine gegenüberliegende Rückseite auf, die als Befestigungsseite ausgebildet ist. Im Bereich der Rückseite ist eine Stützfläche mit einem Vorsprung am Auswerfer vorgesehen. Mit seiner Befestigungsseite kann sich der Auswerfer an einem Halter, welcher auf einer Fräswalze montiert ist, abstützen. Zur Befestigung des Auswerfers an dem Halter ist eine Befestigungsschraube verwendet.

Die Auswerfer unterliegen einem starken Verschleißangriff und müssen daher regelmäßig überprüft und ausgewechselt werden. Hierzu muss der auf dem Fräsrohr angeschweißte Auswerfer abgetrennt und ein neuer aufgeschweißt werden. Dabei ist auf die exakte Positionierung und Ausrichtung des Auswerfers zu achten, um eine ideale Ausförderleistung zu erreichen. Diese Tauscharbeit ist im beengten Arbeitsbereich des Fräsrohrs mühsam.

Es ist Aufgabe der Erfindung, einen verbesserten Auswerfer bereitzustellen, der eine einfache Maschinenwartung ermöglicht.

Diese Aufgabe wird mit einem Auswerfer nach Anspruch 1 gelöst.

Der Auswerfer weist eine seiner Förderfläche abgewandte Befestigungsseite mit einer Stützfläche auf. Mit dieser Befestigungsseite kann der Auswerfer an ein am Fräsrohr befestigtes Bauteil, beispielsweise ein dort angeschweißtes Tragteil angesetzt werden. Über die Stützfläche des Tragteils lassen sich die im Werkzeugeinsatz anstehenden Belastungen zumindest teilweise sicher abtragen. Der Auswerfer ist mit einer Befestigungsaufnahme bzw. einem Befestigungsansatz versehen, so dass er auswechselbar befestigbar ist. Auf diese Weise kann er im Schadens- oder Verschleißfall einfach gewechselt werden.

Gemäß einer bevorzugten Ausführungsvariante der Erfindung kann es vorgesehen sein, dass die Förderfläche des Auswerfers quer zur Vorschubrichtung der Auswerfereinheit angeordnet ist und zumindest bereichsweise konkav ausgebildet ist oder sich im gemuldeten Bereich aus Linear- und/oder Bogenabschnitten zusammensetzt. Die konkave beziehungsweise gemuldete Formgebung ermöglicht eine schaufelartige Geometrie, die die Ausförderrate verbessert.

Wenn vorgesehen ist, dass in die Förderfläche eine oder mehrere Vertiefungen eingebracht sind, dann kann sich während des Werkzeugeinsatzes abgetragenes Gut in den Vertiefungen ablagern. Es bildet dort eine "natürliche" Verschleißschutzschicht.

Erfindungsgemäß ist als Befestigungsaufnahme wenigstens eine Schraubaufnahme verwendet. Dabei kann es insbesondere vorgesehen sein, dass die Schraubaufnahme der Frontseite des Auswerfers zugekehrt in einer Schraubenkopfaufnahme ausläuft, in der ein Schraubenkopf einer Befestigungsschraube zumindest bereichsweise unverdrehbar aufnehmbar ist. Mit den Schraubverbindungen ist ein schneller und problemloser Auswerfertausch möglich. Die versenkte oder teilversenkte Aufnahme des Schraubenkopfs verhindert einen abrasiven Angriff am versenkten Kopfbereich. Darüber hinaus wird ein Lösen der Schraube hier verhindert.

Um den Auswerfer zuverlässig an einem Tragteil abstützen zu können, ist es vorgesehen, dass auf der der Förderfläche abgewandten Seite wenigstens ein abstehender Fixieransatz oder eine eingetiefte Fixieraufnahme angeordnet ist. Anstehende Querkräfte werden dann formschlüssig vom Auswerfer in das Tragteil übertragen. Es ist auch vorgesehen, dass mittels dem wenigstens einen Fixieransatz oder der wenigstens einen Fixieraufnahme formschlüssig eine Verschiebung des Auswerfers in einer Ebene quer zur Vorschubrichtung begrenzbar ist.

Wenn die Gestaltung des Auswerfers derart ist, dass auf der der Förderfläche abgewandten Rückseite eine oder mehrere angeformte Versteifungsrippen angeordnet sind, dann kann mit geringem Materialaufwand ein ausreichend steifer Auswerfer konstruiert werden.

Erfindungsgemäß kann es vorgesehen sein, dass die Schraubaufnahme durch den Fixieransatz oder die Fixieraufnahme hindurchgeführt ist. Dann wird das Stützteil für eine ausreichende Klemmlänge der Befestigungsschraube ausgenutzt.

Erfindungsgemäß ist die Befestigungsseite derart ausgebildet, dass der Auswerfer in verschiedenen Betriebsstellungen montierbar ist. Zu diesem Zweck ist der Auswerfer im Bereich einer Befestigungsseite derart ausgebildet, dass er eine Montage auf Umschlag in zwei verschiedenen Betriebsstellungen ermöglicht. Denkbar ist auch ein Auswerfer, der drei oder vier unterschiedliche Betriebsstellungen ermöglicht. Hierbei macht man sich die Erkenntnis zugrunde, dass der Auswerfer im Wesentlichen an seinem dem Fräsrohr abgewandten Bereich verschleißt. Ist der Verschleißzustand dort erreicht, wird der Auswerfer demontiert und verdreht wieder angebaut.

Der Auswerfer kann insbesondere spiegelsymmetrisch ausgebildet sein.

Eine bevorzugte Erfindungsausgestaltung ist derart, dass die Befestigungsseite einen konvexen oder balligen oder sphärischen Befestigungsabschnitt zur Anlage an einem konkaven oder gemuldeten Aufnahmeabschnitt eines Trägers aufweist. Diese Verbindung schafft eine große Verbindungsfläche, die auch bei unsymmetrischer Belastung der Förderfläche für eine gute Kraftabtragung sorgt. Eine weitere Verbesserung der Standzeit wird dadurch erreicht, dass im Bereich der Förderfläche wenigstens ein Verschleißschutzelement angeordnet ist, das aus einem verschleißfesteren Material als die Förderfläche besteht. Hierbei kann es insbesondere vorgesehen sein, dass das Verschleißschutzelement aus einem Hartwerkstoffelement, beispielsweise Hartmetall oder Keramik, oder einer aufgebrachten Beschichtung, beispielsweise einer Auftragsschweißung, gebildet ist. Die Erfindung wird im Folgenden anhand von in den Zeichnungen dargestellten Ausführungsbeispielen näher erläutert. Es zeigen:
- Figur 1: eine Fräswalze einer Straßenfräsmaschine in Frontansicht,
- Figur 2: die Fräswalze gemäß Figur 1 in Seitenansicht,
- Figur 3: die Ansicht gemäß Figur 2 vergrößert und in leicht veränderter Darstellung,
- Figur 4: eine Auswerfereinheit in perspektivischer Frontansicht,
- Figur 5: die Auswerfereinheit gemäß Figur 4 in perspektivischer Rückansicht,
- Figur 6: einen Träger der Auswerfereinheit gemäß Figur 5 in perspektivischer Rückansicht,
- Figur 7: den Träger gemäß Figur 6 in perspektivischer Ansicht,
- Figur 8: einen Auswerfer der Auswerfereinheit gemäß Figur 6 in perspektivischer Frontansicht,
- Figur 9: den Träger gemäß Figur 8 in perspektivischer Rückansicht,
- Figur 10: in perspektivischer Rückansicht eine zweite Ausgestaltung einer Auswerfereinheit mit einem Auswerfer und einem Träger und
- Figur 11: die Anordnung gemäß Figur 10 in perspektivischer Frontansicht.

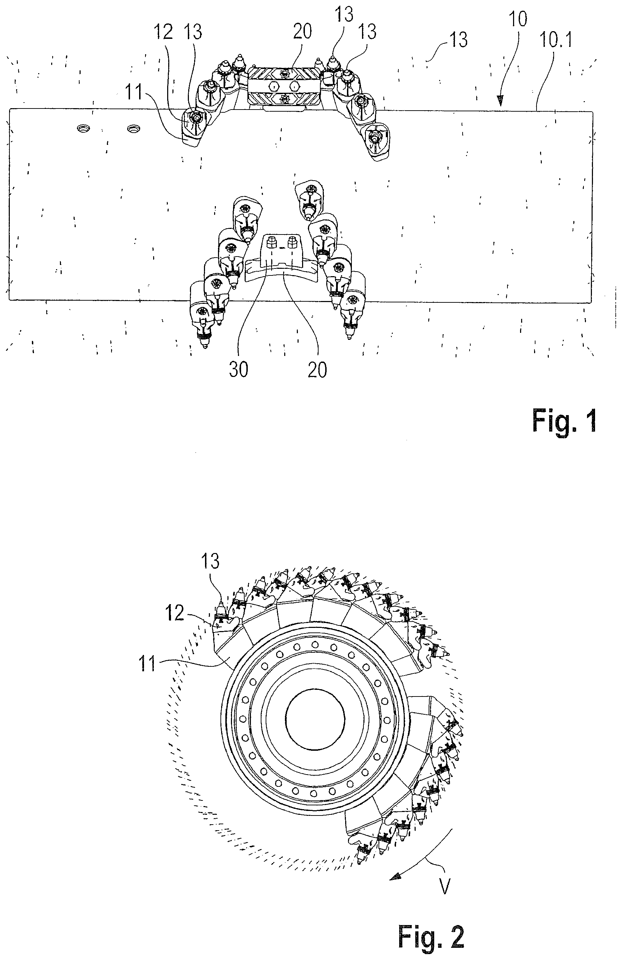

Figur 1 zeigt eine Fräswalze mit einem zylindrischen Fräsrohr 10, auf dessen Walzenoberfläche 10.1 eine Vielzahl von Basisteilen 11 von Meißelhalterwechselsystemen aufgeschweißt sind. Die Basisteile 11 tragen auswechselbare Meißelhalter 12. In den Meißelhaltern 12 ist jeweils ein Meißel 13, nämlich ein Rundschaftmeißel auswechselbar aufgenommen. Die Basisteile 11 sind einander so zugeordnet, dass sie eine Wendel, nämlich eine Transportwendel bilden. Dabei dreht sich die Wendel, ausgehend von der Seite des Fräsrohrs 10 auf der Walzenoberfläche 10.1 in Richtung auf die zwischen den beiden Seiten gebildete Fräsrohrmitte. In den Figuren 1 und 2 sind zur besseren Übersichtlichkeit nur ein Teil der Meißelhalterwechsel-Systeme dargestellt. Von den nicht gezeigten Meißelhalterwechsel-Systemen sind ersatzweise strichlierte Linien gezeigt, die die Mittellängsachse der Meißel 13 repräsentieren. Wie diese Linien erkennen lassen, stehen beidseitig der Fräsrohrmitte jeweils mehrere Transportwendeln.

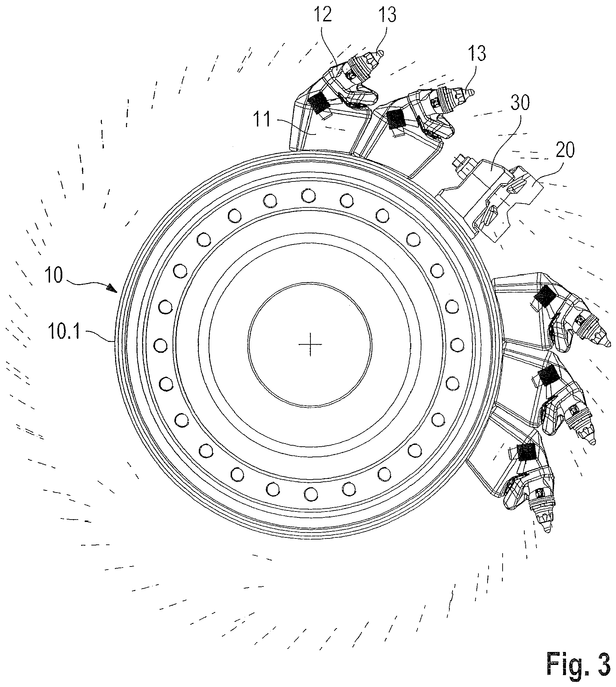

Die Transportwendeln treffen sich paarweise im Bereich der Fräsrohrmitte. Wie die Figur 1 erkennen lässt, ist dort jeweils mindestens eine Auswerfereinheit angeordnet. In der Figur 3 sind gegenüber der Darstellung gemäß Figur 2 die Meißelhalterwechsel-Systeme nicht gezeigt, die den Blick auf die Auswerfereinheit verstellen. Wie diese Darstellung erkennen lässt, wird die Auswerfereinheit von einem Tragteil 30 und einem Auswerfer 20 gebildet.

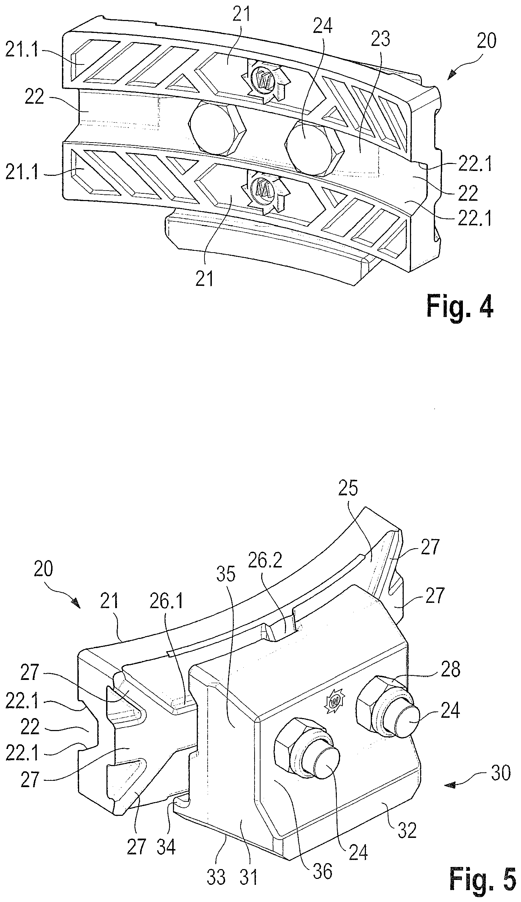

In den Figuren 4 und 5 ist die Auswerfereinheit in Alleindarstellung gezeigt.

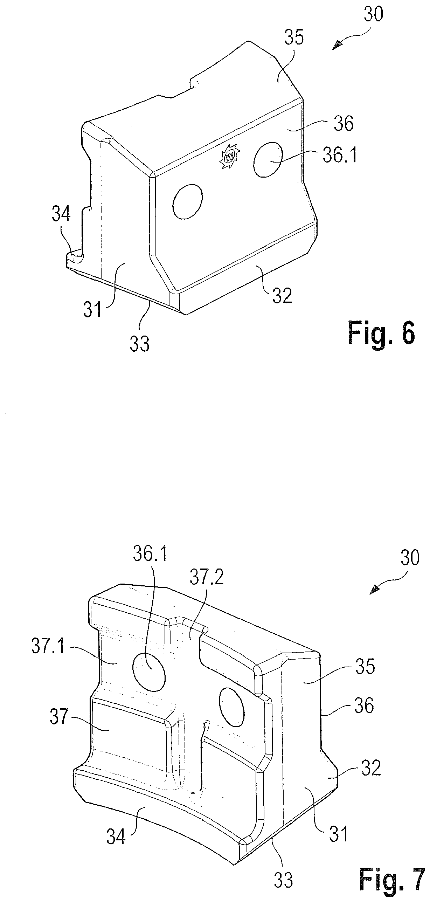

Unter Bezugnahme auf Figuren 6 und 7 wird zunächst die Konstruktion des Tragteils 30 erläutert. Es weist einen Befestigungsfuß 31 auf, der an seiner Unterseite eine Befestigungsfläche 33 bildet. Mit dieser kann das Tragteil 30 auf die Walzenoberfläche 10.1 aufgesetzt und seitlich verschweißt werden. An den Befestigungsfuß 31 ist nach oben abstehend ein Stützteil 35 angeformt, der eine Rückseite 36 bildet. Der Befestigungsfuß 31 ist mittels eines Ansatzes 32 über die Rückseite 36 verbreitert, so dass er eine breite Befestigungsfläche 33 mit großem Stützabstand bildet. Darüber hinaus bringt die durch den Ansatz 32 bewirkte Querschnittsverbreiterung eine Verstärkung des hoch belasteten Übergangsbereiches zwischen Befestigungsfuß 31 und Stützteil 35. Eine weitere Verbreiterung der Befestigungsfläche 33 wird mit einem frontseitigen Vorsprung 34 erreicht, der sich ebenso wie der Ansatz 32 über die gesamte Breite des Tragteils 30 erstreckt. Das Tragteil 30 weist frontseitig eine Stützfläche 37 auf, die sich über die Vorderseite des Stützteils 35 und auch über einen Teil des Befestigungsfußes 31 erstreckt. Diese Ausbildung der Stützfläche 37 ermöglicht eine festigkeitsoptimierte Abstützung des Auswerfers 20. In die Stützfläche 37 sind zwei Aufnahmen 37.1, 37.2 eingearbeitet. Die beiden Aufnahmen 37.1, 37.2 sind so in die Stützfläche 37 eingetieft, dass sie trogartige Mulden bilden.

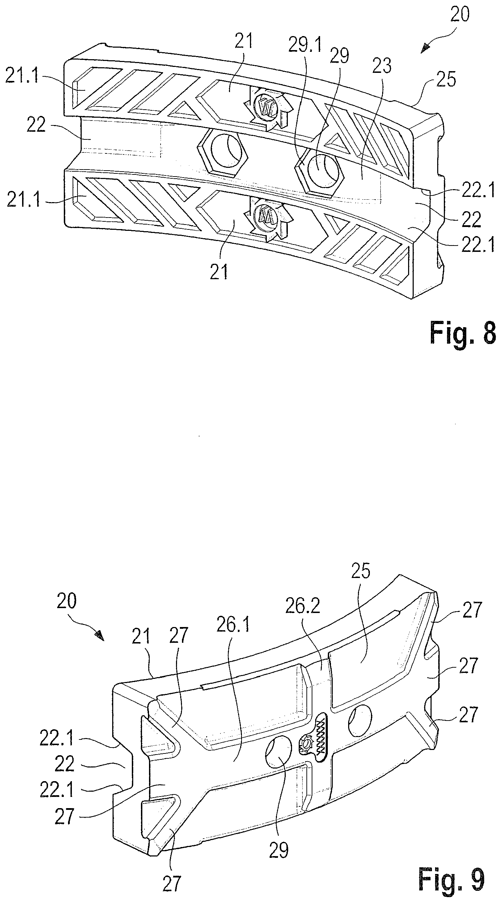

Mit Bezug auf die Figuren 8 und 9 wird nachfolgend der Auswerfer 20 erläutert. Er ist plattenförmig als Gesenk-Schmiedeteil ausgebildet und daher besonders steif. Der Auswerfer 20 weist eine frontseitige Förderfläche 21 auf. Diese ist mit Eintiefungen 21.1, 22 versehen. Zwischen den Eintiefungen 21.1 stehen Rippen, die im Winkel zur Senkrechten stehen und somit in Richtung zur Auswerfermitte geneigt sind. Die Eintiefungen nehmen während des Betriebseinsatzes Abraummaterial auf, so dass sich ein "natürlicher" Verschleißschutz bildet. Eine besonders gute Förderrate wird zudem dadurch erreicht, dass die Förderfläche 21 konkav und damit schaufelartig ausgebildet ist. Die Eintiefung 22 weist zwei Schrägflächen 22.1 auf, die im Winkel zu der Förderfläche 21 stehen und die Förderwirkung unterstützen.

Zwischen den beiden Eintiefungen 22 steht ein verdickter Ansatz 23, der zwei als Durchgangsbohrungen ausgebildete Schraubaufnahmen 29 aufnimmt. Die Schraubaufnahmen 29 laufen frontseitig in sechseckige Schraubenkopfaufnahmen 29.1 aus.

Die Figur 9 zeigt die Rückseite des Auswerfers 20. Wie diese Darstellung erkennen lässt, stehen rückseitig rippenartige Fixieransätze 26.1, 26.2 vom Auswerfer 20 vor. Die Fixieransätze 26.1, 26.2 sind in ihrer Anordnung und Dimensionierung auf die Anordnung und Form der Aufnahmen 37.1, 37.2 des Trägers 30 angepasst. Die Schraubaufnahmen 29 sind durch den Fixieransatz 26.1 hindurchgeführt.

Wie Figur 9 weiter erkennen lässt, sind in den rückseitigen Eckbereichen des Auswerfers 20 Versteifungsrippen 27 angeordnet. Diese sind an den horizontalen Fixieransatz 26 angeschlossen, so dass sich eine optimale Kraftableitung ergibt.

Zur Befestigung des Auswerfers 20 wird dieser mit seiner Rückseite an die Stützfläche 37 des Trägers 30 angesetzt. Dabei greifen dann die Fixieransätze 26.1, 26.2 in die korrespondierenden Aufnahmen 37.1, 37.2 ein. Auf diese Weise ergibt sich eine kreuzweise Verzahnung, die eine Verschiebung des Auswerfers 20 gegenüber dem Träger 30 in Achs- und Radialrichtung des Fräsrohrs 10 verhindert. Über diese verzahnte Verbindung können große Teile der während des Werkzeugeinsatzes entstehenden Kräfte abgeleitet werden.

Die Schraubaufnahmen 29, 36.1 des Auswerfers 20 und des Trägers 30 stehen in Flucht, so dass Befestigungsschrauben 24 (siehe Figuren 4 und 5) durch sie hindurchgesteckt werden können. Der Schraubenkopf der Befestigungsschrauben 24 findet in der Schraubenkopfaufnahme 29.1 Platz, wo er unverdrehbar gehalten wird. Auf die Befestigungsschrauben 24 können, vorzugsweise selbst sichernde Muttern 28 aufgeschraubt und somit der Auswerfer 20 am Träger 30 fixiert werden.

Während des Werkzeugeinsatzes verschleißt vornehmlich der radial außenstehende Bereich des Auswerfers 20. Der Auswerfer 20 ist, wie die Figuren 8 und 9 erkennen lassen, symmetrisch zur Mittelquerebene ausgebildet. Bei Erreichen der Verschleißgrenze kann er daher abgebaut und um 180° gedreht wieder angebaut werden.

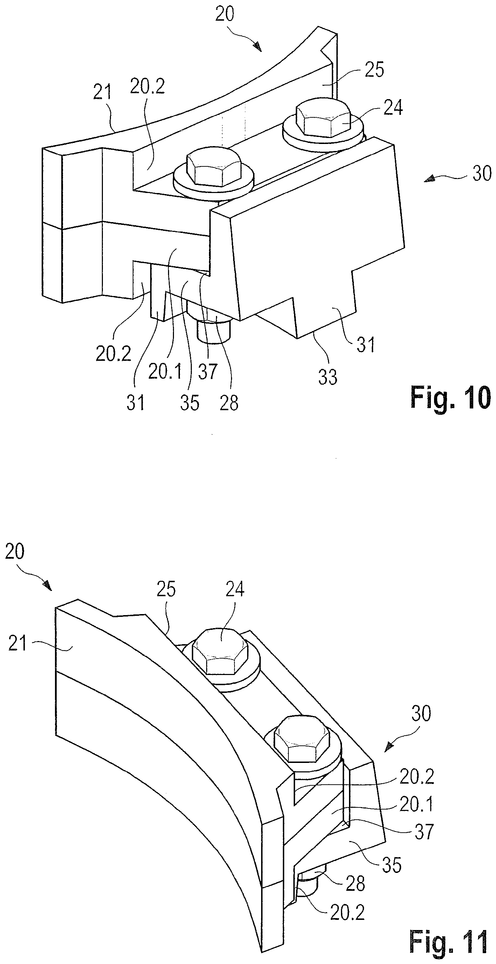

Figuren 10 und 11 zeigen eine weitere Ausgestaltungsvariante einer erfindungsgemäßen Auswerfereinheit. Diese umfasst wieder einen Auswerfer 20 und einen Träger 30. Der Auswerfer 20 besitzt wieder eine gemuldete Förderfläche 21, die in Bearbeitungsrichtung gewandt ist, wobei die Muldung konkav in Richtung entgegen der Bearbeitungsrichtung eingetieft ist. Der Förderfläche 21 abgewandt weist der Auswerfer 20 an seiner rückwärtigen Befestigungsseite 25 einen Befestigungsansatz 20.1 auf. Dieser steht blockartig entgegengesetzt der Bearbeitungsrichtung ab. Er besitzt zwei Schraubaufnahmen, die fluchtend zu Schraubaufnahmen des Trägers 30 angeordnet werden können.

Durch die Schraubaufnahmen lassen sich Befestigungsschrauben 24 hindurchführen und auf deren Schraubbolzen endseitig Muttern 28 aufdrehen. Damit wird der Auswerfer 20 fest mit einer Stützfläche 37 des Trägers 30 verklemmt, insbesondere verspannt. Wie die Zeichnungen erkennen lassen, ist der Auswerfer 20 im Bereich der Befestigungsseite 25 mit Ausnehmungen 20.2 versehen. Die obere Ausnehmung 20.2 nimmt die Köpfe der Befestigungsschrauben 24 auf und schützt sie so hinter der Förderfläche 21 vor dem abrassiven Angriff des abgetragenen Materials. Die untere Ausnehmung 20.2 zieht sich schürzenartig über den Träger 30 und schützt diesen hier. Der Auswerfer 20 ist zur Mittelquerachse symmetrisch und kann daher um 180° gedreht auf Umschlag in zwei Betriebsstellungen an dem Träger 30 befestigt werden.

## Patentansprüche

1. Auswerfer (20) für Straßenfräsmaschinen, aufweisend:
- eine in Vorschubrichtung (V) gerichtete Förderfläche (21);
- eine der Förderfläche (21) abgewandte Rückseite, wobei die Rückseite eine Befestigungsseite (25) mit wenigstens einer Stützfläche bildet;
- eine Schraubaufnahme (29),
wobei auf der der Förderfläche (21) abgewandten Seite wenigstens ein abstehender Fixieransatz (26.1, 26.2) oder eine eingetiefte Fixieraufnahme angeordnet ist,
wobei mittels dem wenigstens einen Fixieransatz (26.1, 26.2) oder der wenigstens einen Fixieraufnahme formschlüssig eine Verschiebung des Auswerfers (20) in einer Ebene quer zur Vorschubrichtung (V) begrenzbar ist, und wobei die Befestigungsseite (25) derart ausgebildet ist, dass der Auswerfer (20) auf Umschlag in zwei verschiedenen Betriebsstellungen montierbar ist.

2. Auswerfer nach Anspruch 1,
**dadurch gekennzeichnet,**
**dass** die Förderfläche (21) des Auswerfers (20) im Wesentlichen quer zur Vorschubrichtung (V) der Auswerfereinheit angeordnet ist und zumindest bereichsweise in Richtung entgegen der Werkzeugvorschubrichtung gemuldet, insbesondere schaufelartig eingetieft ausgebildet ist.

3. Auswerfer nach Anspruch 2,
**dadurch gekennzeichnet,**
**dass** die Förderfläche (21) zumindest bereichsweise konkav ausgebildet ist oder sie sich im gemuldeten Bereich aus Linear- und/oder Bogenabschnitten zusammensetzt.

4. Auswerfer nach einem der Ansprüche 1 bis 3,
**dadurch gekennzeichnet,**
**dass** in die Förderfläche (21) eine oder mehrere Vertiefungen (21.1, 22) eingebracht sind.

5. Auswerfer nach einem der Ansprüche 1 bis 4
**dadurch gekennzeichnet,**
**dass** die wenigstens eine Schraubaufnahme (29) der Frontseite des Auswerfers (20) zugekehrt in eine Schraubenkopfaufnahme (29.1) ausläuft, in der ein Schraubenkopf einer Befestigungsschraube (24) zumindest bereichsweise unverdrehbar aufnehmbar ist.

6. Auswerfer nach einem der Ansprüche 1 bis 5, **dadurch gekennzeichnet, dass** auf der der Förderfläche (21) abgewandten Rückseite eine oder mehrere angeformte Versteifungsrippen (27) angeordnet sind.

7. Auswerfer nach einem der Ansprüche 1 bis 6,
**dadurch gekennzeichnet,**
**dass** die Schraubaufnahme (29) durch den Fixieransatz (26.2) oder die Fixieraufnahme hindurchgeführt ist.

8. Auswerfer nach einem der Ansprüche 1 bis 7,
**dadurch gekennzeichnet,**
**dass** der Fixieransatz (26.2) oder die Fixieraufnahme spiegelsymmetrisch ausgebildet ist.

9. Auswerfer nach einem der Ansprüche 1 bis 8,
**dadurch gekennzeichnet,**
**dass** die Befestigungsseite (25) einen konvexen oder balligen, beispielsweise sphärischen, Befestigungsabschnitt zur Anlage an einem konkaven oder gemuldeten Aufnahmeabschnitt eines Trägers (30) aufweist.

10. Auswerfer nach einem der Ansprüche 1 bis 9,
**dadurch gekennzeichnet,**
**dass** im Bereich der Förderfläche (21) wenigstens ein Verschleißschutzelement angeordnet ist, das aus einem verschleißfesteren Material als die Förderfläche (21) besteht.

11. Auswerfer nach einem der Ansprüche 1 bis 10,
**dadurch gekennzeichnet,**
**dass** das Verschleißschutzelement von einem Hartwerkstoffelement oder einer Auftragsschweißung gebildet ist.

12. Auswerfereinheit mit einem Tragteil (30) und einem Auswerfer (20),
wobei der Auswerfer (20), aufweist:
- eine in Vorschubrichtung (V) gerichtete Förderfläche (21);
- eine der Förderfläche (21) abgewandte Rückseite, wobei die Rückseite eine Befestigungsseite (25) mit wenigstens einer Stützfläche bildet;
- eine Schraubaufnahme(29),
wobei auf der der Förderfläche (21) abgewandten Seite wenigstens ein abstehender Fixieransatz (26.1, 26.2) oder eine eingetiefte Fixieraufnahme angeordnet ist,
wobei mittels dem wenigstens einen Fixieransatz (26.1, 26.2) oder der wenigstens einen Fixieraufnahme (29) formschlüssig eine Verschiebung des Auswerfers (20) gegenüber dem Tragteil (30) in einer Ebene quer zur Vorschubrichtung (V) begrenzbar ist, und wobei die Befestigungsseite (25) derart ausgebildet ist, dass der Auswerfer (20) auf Umschlag in zwei, verschiedenen Betriebsstellungen an dem Tragteil (30) montierbar ist.

13. Fräswalze mit einem zylindrischen Fräsrohr (10), auf dessen Walzenoberfläche (10.1) eine Vielzahl von Basisteilen (11) von Meißelhalterwechselsystemen aufgeschweißt sind, wobei die Basisteile (11) auswechselbare Meißelhalter (12) tragen, wobei die Basisteile (11) einander so zugeordnet sind, dass sie eine Wendel, nämlich eine Transportwendel bilden, wobei sich die Transportwendel, ausgehend von der Seite des Fräsrohrs 10 auf der Walzenoberfläche 10.1 in Richtung auf die zwischen den beiden Seiten gebildete Fräsrohrmitte dreht, wobei die Transportwendel sich paarweise im Bereich der Fräsrohrmitte treffen, wobei hier jeweils mindestens eine Auswerfereinheit angeordnet ist, die von einem Tragteil (30) und einem Auswerfer (20) gebildet ist,
wobei der Auswerfer (20), aufweist:
- eine in Vorschubrichtung (V) gerichtete Förderfläche (21);
- eine der Förderfläche (21) abgewandte Rückseite, wobei die Rückseite eine Befestigungsseite (25) mit wenigstens einer Stützfläche bildet;
- eine Schraubaufnahme (29),
wobei auf der der Förderfläche (21) abgewandten Seite wenigstens ein abstehender Fixieransatz (26.1, 26.2) oder eine eingetiefte Fixieraufnahme angeordnet ist,
wobei mittels dem wenigstens einen Fixieransatz (26.1, 26.2) oder der wenigstens einen Fixieraufnahme (29) formschlüssig eine Verschiebung des Auswerfers (20) gegenüber dem Tragteil (30) in einer Ebene quer zur Vorschubrichtung (V) begrenzbar ist,
und wobei die Befestigungsseite (25) derart ausgebildet ist, dass der Auswerfer (20) auf Umschlag in zwei, verschiedenen Betriebsstellungen montierbar ist.

14. Auswerfereinheit nach Anspruch 12 oder Fräswalze nach Anspruch 13 mit einem Auswerfer nach einem der Ansprüche 1 bis 11.

## Claims

1. An ejector (20) for road milling machines, comprising:
- a conveyor surface (21) directed in the advancing direction (V);
- a rear side facing away from the conveyor surface (21), wherein the rear side forms an attachment side (25) with at least one supporting surface;
- a screw receptacle (29),
wherein at least one protruding fixing shoulder (26.1, 26.2) or a recessed fixing receptacle is arranged on the side facing away from the conveyor surface (21), wherein by means of the at least one fixing shoulder (26.1, 26.2) or the at least one fixing receptacle a displacement of the ejector (20) in a plane transverse to the advancing direction (V) can be delimited in a form-fitting manner, and wherein the attachment side (25) is designed such that the ejector (20) can be mounted on the cover in two different operating positions.

2. The ejector according to claim 1,
**characterised in that**
the conveyor surface (21) of the ejector (20) is arranged substantially transverse to the advancing direction (V) of the ejector unit and is designed to be troughed, particularly recessed in a shovel-like manner, at least in regions in the opposite direction to the tool advancing direction.

3. The ejector according to claim 2,
**characterised in that**
the conveyor surface (21) is designed at least in regions to be concave or comprises linear and/or arc sections in the troughed region.

4. The ejector according to one of claims 1 to 3,
**characterised in that**
one or more recesses (21.1, 22) are incorporated in the conveyor surface (21).

5. The ejector according to one of claims 1 to 4,
**characterised in that**
the at least one screw receptacle (29) of the front side of the ejector (20) tapers off facing into a screw head receptacle (29.1), in which a screw head of a fastening screw (24) is receivable at least in regions in a non-rotatable manner.

6. The ejector according to one of claims 1 to 5, **characterised in that** one or more integrally moulded reinforcing ribs (27) are arranged on the rear side facing away from the conveyor surface (21).

7. The ejector according to one of claims 1 to 6,
**characterised in that**
the screw receptacle (29) is guided through the fixing shoulder (26.2) or the fixing receptacle.

8. The ejector according to one of claims 1 to 7,
**characterised in that**
the fixing shoulder (26.2) or the fixing receptacle is designed mirror-symmetrically.

9. The ejector according to one of claims 1 to 8,
**characterised in that**
the attachment side (25) has a convex or curved, for example spherical, fastening section for bearing against a concave or troughed receiving section of a support (30).

10. The ejector according to one of claims 1 to 9,
**characterised in that**
in the region of the conveyor surface (21) at least one wear protection element is arranged which consists of a more wear-resistant material than the conveyor surface (21).

11. The ejector according to one of claims 1 to 10,
**characterised in that**
the wear protection element is formed by a hard material element or deposition welding.

12. An ejector unit having a support part (30) and an ejector (20),
wherein the ejector (20) comprises:
- a conveyor surface (21) directed in the advancing direction (V);
- a rear side facing away from the conveyor surface (21), wherein the rear side forms an attachment side (25) with at least one supporting surface;
- a screw receptacle (29),
wherein at least one protruding fixing shoulder (26.1, 26.2) or a recessed fixing receptacle is arranged on the side facing away from the conveyor surface (21), wherein by means of the at least one fixing shoulder (26.1, 26.2) or the at least one fixing receptacle (29) a displacement of the ejector (20) in relation to the support part (30) in a plane transverse to the advancing direction (V) can be delimited in a form-fitting manner, and wherein the attachment side (25) is designed such that the ejector (20) can be mounted on the cover in two different operating positions on the support part (30).

13. A milling drum having a cylindrical milling tube (10), on the roller surface (10.1) of which a plurality of base parts (11) of chisel holder changing systems are welded, wherein the base parts (11) comprise exchangeable chisel holders (12), wherein the base parts (11) are associated with one another such that they form a helix, specifically a transport helix, wherein the transport helix, proceeding from the side of the milling tube 10 on the roller surface 10.1, rotates towards the milling tube centre formed between the two sides, wherein the transport helixes are brought into contact in pairs in the region of the milling tube centre, wherein at least one ejector unit is arranged here in each case and formed by a support part (30) and an ejector (20), wherein the ejector (20) comprises:
- a conveyor surface (21) directed in the advancing direction (V);
- a rear side facing away from the conveyor surface (21), wherein the rear side forms an attachment side (25) with at least one supporting surface;
- a screw receptacle (29),
wherein at least one protruding fixing shoulder (26.1, 26.2) or a recessed fixing receptacle is arranged on the side facing away from the conveyor surface (21), wherein by means of the at least one fixing shoulder (26.1, 26.2) or the at least one fixing receptacle (29) a displacement of the ejector (20) in relation to the support part (30) in a plane transverse to the advancing direction (V) can be delimited in a form-fitting manner,
and wherein the attachment side (25) is designed such that the ejector (20) can be mounted on the cover in two different operating positions.

14. The ejector unit according to claim 12 or milling drum according to claim 13 comprising an ejector according to one of claims 1 to 11.

## Revendications

1. Éjecteur (20) pour fraiseuses routières, présentant :
- une surface de transport (21) orientée dans la direction d'avancement (V) ;
- une face arrière opposée à la surface de transport (21), la face arrière formant une face de fixation (25) ayant au moins une surface de support ;
- un logement fileté (29),
sur la face opposée à la surface de transport (21) étant disposé au moins une saillie de fixation faisant saillie (26.1, 26.2) ou un logement de fixation creusé,
ladite au moins une saillie de fixation (26.1, 26.2) ou ledit au moins un logement de fixation permettant de limiter par complémentarité de forme un coulissement de l'éjecteur (20) dans un plan transversal à la direction d'avancement (V) et la face de fixation (25) étant conçue de manière à ce que l'éjecteur (20) puisse être monté par retournement dans deux positions de fonctionnement différentes.

2. Éjecteur selon la revendication 1,
**caractérisé en ce**
**que** la surface de transport (21) de l'éjecteur (20) est disposée sensiblement transversalement à la direction d'avancement (V) de l'unité d'éjection et est évidée au moins à certains endroits à l'encontre de la direction d'avancement d'outil, en particulier formée en creux à la façon d'une aube.

3. Éjecteur selon la revendication 2,
**caractérisé en ce**
**que** la surface de transport (21) est concave au moins à certains endroits ou elle se compose dans la zone évidée de sections linéaires et/ou arquées.

4. Éjecteur selon l'une des revendications 1 à 3,
**caractérisé en ce**
**que** dans la surface de transport (21) sont ménagés un ou plusieurs évidements (21.1, 22).

5. Éjecteur selon une des revendications 1 à 4,
**caractérisé en ce**
**que** ledit au moins un logement fileté (29) s'étend en regard de la face avant de l'éjecteur (20) dans un logement de tête de vis (29.1) dans lequel la tête d'une vis de fixation (24) peut être reçue au moins partiellement bloquée en rotation.

6. Éjecteur selon l'une des revendications 1 à 5, **caractérisé en ce que** sur la face arrière opposée à la surface de transport (21) sont formées une ou plusieurs rainures de renforcement (27).

7. Éjecteur selon l'une des revendications 1 à 6,
**caractérisé en ce**
**que** le logement fileté (29) traverse la saillie de fixation (26.2) ou le logement de fixation.

8. Éjecteur selon l'une des revendications 1 à 7,
**caractérisé en ce**
**que** la saillie de fixation (26.2) ou le logement de fixation est symétrique en miroir.

9. Éjecteur selon l'une des revendications 1 à 8,
caractérisé en ce
la face de fixation (25) présente une section de fixation convexe, bombée, par exemple sphérique pour venir en contact avec une section de logement concave ou évidée d'un support (30).

10. Éjecteur selon l'une des revendications 1 à 9,
**caractérisé en ce**
**que** dans la zone de la surface de transport (21) est disposé au moins un élément de protection contre l'usure qui est constitué d'un matériau résistant à l'usure en tant que surface de transport (21).

11. Éjecteur selon l'une des revendications 1 à 10,
**caractérisé en ce**
**que** l'élément de protection contre l'usure est constitué d'un élément en matériau dur ou d'une soudure d'apport.

12. Unité d'éjection comportant une partie de support (30) et un éjecteur (20), l'éjecteur (20), présentant :
- une surface de transport (21) orientée dans la direction d'avancement (V) ;
- une face arrière opposée à la surface de transport (21), la face arrière formant une face de fixation (25) ayant au moins une surface de support ;
- un logement fileté (29),
sur la face opposée à la surface de transport (21) étant disposé au moins une saillie de fixation faisant saillie (26.1, 26.2) ou un logement de fixation creusé,
ladite au moins une saillie de fixation (26.1, 26.2) ou ledit au moins un logement de fixation (29) permettant de limiter par complémentarité de forme un coulissement de l'éjecteur (20) par rapport à la partie de support (30) dans un plan transversal à la direction d'avancement (V) et la face de fixation (25) étant conçue de manière à ce que l'éjecteur (20) puisse être monté sur la partie de support (30) par retournement dans deux positions de fonctionnement différentes.

13. Tambour de fraisage comprenant un tube de fraisage cylindrique (10), sur sa surface de fraisage (10.1) étant soudée une pluralité de parties de base (11) de systèmes de changement de porte-burin, les parties de base (11) portant des porte-burin interchangeables (12), les parties de base (11) étant disposées les unes par rapport aux autres de manière à former une hélice, notamment une hélice de transport, l'hélice de transport tournant, à partir du côté du tube de fraisage 10 sur la surface de fraisage 10.1 en direction du centre de tube de fraisage formé de chaque côté, les hélices de transport se réunissent par paires dans la zone centrale du tube de fraisage, où est disposée au moins une unité d'éjection respective constituée d'une partie de support (30) et d'un éjecteur (20),
l'éjecteur (20), présentant :
- une surface de transport (21) orientée dans la direction d'avancement (V) ;
- une face arrière opposée à la surface de transport (21), la face arrière formant une face de fixation (25) ayant au moins une surface de support ;
- un logement fileté (29),
sur la face opposée à la surface de transport (21) étant disposé au moins une saillie de fixation faisant saillie (26.1, 26.2) ou un logement de fixation creusé,
ladite au moins une saillie de fixation (26.1, 26.2) ou ledit au moins un logement de fixation (29) permettant de limiter par complémentarité de forme un coulissement de l'éjecteur (20) par rapport à la partie de support (30) dans un plan transversal à la direction d'avancement (V)
et la face de fixation (25) est conçue de manière à ce que l'éjecteur (20) puisse être monté par retournement dans deux positions de fonctionnement différentes.

14. Unité d'éjection selon la revendication 12 ou tambour de fraisage selon la revendication 13 comportant un éjecteur selon l'une des revendications 1 à 11.
